# EUROPÄISCHE PATENTSCHRIFT

(11) **EP 3 770 396 B1**
(45) Veröffentlichungstag und Bekanntmachung des Hinweises auf die Patenterteilung: **26.06.2024**
(21) Anmeldenummer: 19188339.6
(22) Anmeldetag: 25.07.2019
(51) Int. Cl.: F01N 13/18, F01N 13/00

(54) **ABGASNACHBEHANDLUNGSVORRICHTUNG FÜR EINE ABGASANLAGE EINES KRAFTFAHRZEUGS SOWIE KRAFTFAHRZEUG MIT EINER DERARTIGEN ABGASNACHBEHANDLUNGSVORRICHTUNG**
EXHAUST GAS AFTERTREATMENT DEVICE FOR AN EXHAUST SYSTEM OF A MOTOR VEHICLE AND MOTOR VEHICLE COMPRISING SUCH AN EXHAUST GAS AFTERTREATMENT DEVICE
DISPOSITIF DE POST-TRAITEMENT DES GAZ D'ÉCHAPPEMENT POUR UNE INSTALLATION DE GAZ D'ÉCHAPPEMENT D'UN VÉHICULE AUTOMOBILE AINSI QUE VÉHICULE AUTOMOBILE DOTÉ D'UN TEL DISPOSITIF DE POST-TRAITEMENT DES GAZ D'ÉCHAPPEMENT

(43) Veröffentlichungstag der Anmeldung: 27.01.2021
(73) Patentinhaber: RTA GmbH, 3193 St. Aegyd/N (AT)
(72) Erfinder: Haas, Frank, 77889 Seebach (DE)
(74) Vertreter: Westphal, Mussgnug & Partner Patentanwälte mbB

(56) Entgegenhaltungen:
- EP-A1- 1 353 047
- EP-A1- 1 701 011
- EP-A1- 2 119 885
- EP-A1- 2 233 708
- US-A1- 2003 015 872

## Beschreibung

Die vorliegende Erfindung betrifft eine Abgasnachbehandlungsvorrichtung für eine Abgasanlage eines Kraftfahrzeugs. Weiterhin betrifft die Erfindung ein Kraftfahrzeug umfassend einen Verbrennungsmotor und eine Abgasanlage mit einer derartigen Abgasnachbehandlungsvorrichtung zum Nachbehandeln der vom Verbrennungsmotor erzeugten Abgase.

Derartige Abgasnachbehandlungsvorrichtungen weisen üblicherweise ein Gehäuse mit einem rohrförmigen Gehäusemantel, einem ersten Endboden und einen zweiten Endboden auf, die einen Innenraum umschließen, wobei weitere zwischen den beiden Endböden angeordnete Zwischenböden vorgesehen sein können, insbesondere, um die Stabilität der Abgasnachbehandlungsvorrichtung zu erhöhen und um die Strömung des Abgases durch die Abgasnachbehandlungsvorrichtung zu lenken.

Im Folgenden soll angenommen werden, dass der erste Endboden bezogen auf die Strömungsrichtung des Abgases durch die Abgasnachbehandlungsvorrichtung stromaufwärts vom zweiten Endboden angeordnet ist.

In derartigen Abgasnachbehandlungsvorrichtungen wird das Abgas, welches von einem Verbrennungsmotor, insbesondere von einem Dieselmotor, eines Kraftfahrzeugs und insbesondere eines Nutzfahrzeugs erzeugt wird, zumindest in zwei Schritten nachbehandelt. Zunächst werden die Abgase in einem Oxidationskatalysator oxidiert, beispielsweise Kohlenmonoxid (CO) zu Kohlendioxid (CO2). Weiterhin werden unter anderem unverbrannte Kohlenwasserstoffe (HC) oxidiert. Anschließend werden die Abgase in einem Partikelfilter gefiltert. Folglich ist der Partikelfilter bezogen auf die Strömungsrichtung des Abgases stromabwärts vom Oxidationskatalysator angeordnet. Stromabwärts des Partikelfilters können weitere Schritte zum Nachbehandeln des Abgases durchgeführt werden, beispielsweise kann Harnstoff eingespritzt werden, um eine selektive katalytische Reduktion durchzuführen.

Die herausgefilterten Partikel lagern sich im Partikelfilter an. Mit zunehmender Beladung sinkt die Speicherfähigkeit des Partikelfilters, während gleichzeitig sein Durchströmungswiderstand zunimmt. Dementsprechend werden Regenerationen durchgeführt, bei denen die angelagerten Partikel abgebrannt werden. Da sich im Partikelfilter auch nicht abbrennbare Partikel einlagern, kommt es trotz Regenerationen allmählich zu einem Zusetzen des Partikelfilters, was dessen Speicherfähigkeit reduziert und dessen Durchströmungswiderstand erhöht. Über die vorgesehene Laufzeit des Verbrennungsmotors kann es daher erforderlich sein, den Partikelfilter auszutauschen. Unerwünscht ist dabei, die komplette Abgasbehandlungsvorrichtung austauschen zu müssen. Vielmehr ist erwünscht, die Abgasbehandlungsvorrichtung so auszugestalten, dass der Partikelfilter mit möglichst geringem Aufwand zugänglich gemacht und nur dieser ausgetauscht werden kann. Hierzu ist es üblich, ein Gehäuse der Abgasbehandlungsvorrichtung so auszugestalten, dass es geöffnet werden kann. Zu diesem Zweck lassen sich zum Beispiel einzelne Bestandteile des Gehäuses zerstörungsfrei lösbar aneinander befestigen.

Derartige Abgasnachbehandlungsvorrichtungen sind beispielsweise aus der EP 1 701 011 A1, der US 2003/015872 A1, der EP 2 119 885 A1, der EP 2 233 708 A1, der EP 1 353 047 A1, der DE 20 2007 006 804 A1 und der EP 1 391 260 A1 bekannt. Bei der EP 2 233 708 A1 ist ein Aufnahmerohr vorgesehen, welches von einer auslassseitigen Verlängerung des Oxidationskatalysatormantels gebildet wird, in welches der Partikelfilter eingesteckt ist und aus welchem der Partikelfilter herausgezogen werden kann, wenn dieser ausgetauscht werden soll. Damit der Partikelfilter gut zugänglich ist, durchdringt das Aufnahmerohr den zweiten Endboden. Aufgrund der Tatsache, dass das Aufnahmerohr von einer auslassseitigen Verlängerung des Oxidationskatalysatormantels gebildet wird, entsteht eine vergleichsweise lang gestreckte Baugruppe, welche bei der Montage der Abgasnachbehandlungsvorrichtung schwierig zu handhaben ist.

Aufgabe einer Ausführungsform der vorliegenden Erfindung ist es, eine Abgasnachbehandlungsvorrichtung für eine Abgasanlage eines Kraftfahrzeugs vorzuschlagen, mit welcher es mit einfachen und kostengünstigen Mitteln möglich ist, den Partikelfilter auf einfache Weise austauschen zu können. Darüber hinaus soll die Abgasnachbehandlungsvorrichtung einfach herzustellen und zu montieren sein. Des Weiteren liegt einer Ausgestaltung der vorliegenden Erfindung die Aufgabe zugrunde, ein Kraftfahrzeug zu schaffen, welches mit einer derartigen Abgasnachbehandlungsvorrichtung ausgerüstet und betrieben werden kann.

Diese Aufgabe wird mit den in den Ansprüchen 1 und 10 angegebenen Merkmalen gelöst. Vorteilhafte Ausführungsformen sind Gegenstand der Unteransprüche.

Eine Ausführungsform der Erfindung betrifft eine Abgasnachbehandlungsvorrichtung für eine Abgasanlage eines Kraftfahrzeugs, umfassend
- ein Gehäuse mit einem Gehäusemantel, einem ersten Endboden und einem zweiten Endboden, die einen Innenraum umschließen,
- ein ganz oder teilweise im Innenraum angeordnetes Aufnahmerohr,
- einen ganz oder teilweise im Aufnahmerohr angeordneter Oxidationskatalysator mit einem Oxidationskatalysatormantel, wobei der Oxidationskatalysatormantel in zumindest einem ersten Anlagebereich am Aufnahmerohr anliegt,
- einen teilweise im Aufnahmerohr angeordneten Partikelfilter mit einem Partikelfiltermantel, der den zweiten Endboden durchdringt, und
- ein Anschlussrohr, welches mittels einer Verbindungseinrichtung lösbar mit dem Partikelfiltermantel verbindbar oder verbunden ist, wobei
- das Aufnahmerohr, der Endboden und das Anschlussrohr in einem Verbindungsabschnitt miteinander verbunden sind.

Im Gegensatz zu der in der EP 2 233 708 A1 offenbarten Abgasnachbehandlungsvorrichtung sind der Oxidationskatalysatormantel und das Aufnahmerohr nicht einteilig ausgeführt, sondern auf eine geeignete Weise miteinander verbunden, wobei die Verbindung lösbar oder unlösbar sein kann. Lösbare Verbindungen können beispielsweise mittels eines Reibschlusses oder einer Flanschverbindung unter Verwendung von Schrauben bereitgestellt werden. Der Zeitpunkt, wann der vorschlagsgemäße Oxidationskatalysatormantel mit dem Aufnahmerohr verbunden wird, kann so gewählt werden, dass ein günstiger Herstellungsprozess ermöglicht wird. Ein Kriterium zur Wahl des Zeitpunkts kann die Handhabbarkeit insbesondere des Oxidationskatalysators während des Herstellungsprozesses sein. Insofern lässt sich die vorschlagsgemäße Abgasnachbehandlungsvorrichtung insbesondere gegenüber der in der EP 2 233 708 A1 offenbarten Abgasnachbehandlungsvorrichtung deutlich einfacher und flexibler fertigen. Zudem durchdringt im Gegensatz zu der EP 2 233 708 A1 nicht das Aufnahmerohr, sondern der Partikelfiltermantel den zweiten Endboden, wodurch die Zugänglichkeit zum Partikelfiltermantel verbessert wird.

Je nach Ausführungsform ist es möglich, dass das Aufnahmerohr vollständig im vom Gehäuse umschlossenen Innenraum angeordnet ist. Alternativ kann das Aufnahmerohr den ersten Endboden durchdringen. Es ist jedoch nicht vorgesehen, dass das Aufnahmerohr den zweiten Endboden durchdringt.

Gemäß einer ersten erfindungsgemäßen Ausführungsform
- definiert das Aufnahmerohr eine Längsachse,
- sind das Aufnahmerohr, der zweite Endboden und das Anschlussrohr entlang der Längsachse im Verbindungsabschnitt überlappend angeordnet, und
- im Verbindungsabschnitt mittels einer gemeinsamen Schweißnaht miteinander verbunden.

In dieser Ausführungsform können das Aufnahmerohr, der zweite Endboden und das Anschlussrohr mit nur einer einzigen, gemeinsamen Schweißnaht miteinander verbunden werden, so dass es nicht notwendig ist, jeweils zwei der genannten Bauteile mit jeweils einer eigenen Schweißnaht miteinander zu verbinden. Aufgrund der Möglichkeit, die Anzahl der Schweißnähte zu reduzieren, lässt sich die Fertigungsdauer niedrig halten.

Gemäß einer zweiten erfindungsgemäßen Ausführungsform
- definiert das Aufnahmerohr eine Längsachse,
- sind das Aufnahmerohr und das Anschlussrohr entlang der Längsachse im Verbindungsabschnitt beabstandet zueinander angeordnet, wobei
- das Aufnahmerohr im Verbindungsabschnitt mit einer ersten Schweißnaht mit dem zweiten Endboden verbunden sein kann und
- das Anschlussrohr im Verbindungsabschnitt mit einer zweiten Schweißnaht mit dem zweiten Endboden verbunden sein kann.

Auch wenn in dieser Ausführungsform zwei Schweißnähte gefertigt werden müssen, kann der im Vergleich zu der zuvor vorgestellten Ausführungsform erhöhte Fertigungsaufwand dadurch reduziert werden, dass eine Schweißnaht, mit welcher zwei benachbart zueinander angeordnete Bauteile miteinander verbunden werden, einfacher und zuverlässiger zu fertigen ist als eine Schweißnaht, mit welcher drei oder mehr Bauteile miteinander verbunden werden. Ein wesentlicher Aspekt bei Abgasnachbehandlungsvorrichtungen ist, dass die Schweißnähte nicht nur den Festigkeitsanforderungen genügen, sondern auch luftdicht sein müssen. Insbesondere die letzte Anforderung lässt sich in dieser Ausführungsform besonders zuverlässig erfüllen. Allerdings hat das Vorsehen von zwei räumlich getrennten Schweißnähten auch Vorteile bezüglich der Festigkeit, da die im Betrieb der Abgasnachbehandlungsvorrichtung auftretenden Belastungen auf zwei Schweißnähte verteilt werden können.

Bei einer weitergebildeten Ausführungsform kann der zweite Endboden mittels einer Falzverbindung mit dem Gehäusemantel verbunden sein. Die Verwendung von Falzverbindungen hat insbesondere den Vorteil, dass sie auf vergleichsweise einfache und kostengünstige Weise durch ein entsprechendes Umformen der betreffenden Bauteile, in diesem Fall des Mantels des Gehäuses und des zweiten Endbodens, gefertigt werden können. Weitere Bauteile zum Ausbilden der Verbindung, beispielsweise Schrauben, sind nicht notwendig, so dass derartige Bauteile im Betrieb nicht verloren gehen oder versagen können. Zudem wird die Lagerhaltung vereinfacht, da keine Vorkehrungen getroffen werden müssen, um beispielsweise eine ausreichende Anzahl von Schrauben oder dergleichen beim Herstellungsprozess zur Verfügung zu stellen. Da sich bei Falzverbindungen die verbundenen Bauteile etwas relativ zueinander bewegen können, handelt es sich hierbei um eine bedingt starre Verbindung. Daher eignen sich Falzverbindungen besonders, um Schwingungsbelastungen aufzunehmen. Sie wirken dämpfend auf die Abgasnachbehandlungsvorrichtung.

Bei einer weiteren Ausführungsform kann der Oxidationskatalysatormantel im ersten Anlagebereich mittels einer Schweißverbindung mit dem Aufnahmerohr verbunden sein. Wie erwähnt, sind in der vorschlagsgemäßen Abgasnachbehandlungsvorrichtung das Aufnahmerohr und der Oxidationskatalysatormantel getrennte Bauteile, welche erst im Herstellungsprozess miteinander verbunden werden. Die Verwendung der Schweißverbindung zum Verbinden des Aufnahmerohres mit dem Oxidationskatalysatormantel hat sich als besonders geeignet herausgestellt, insbesondere deshalb, da mittels der Schweißverbindung eine besonders zuverlässige und hoch beanspruchbare Verbindung bereitgestellt wird.

Eine weitergebildete Ausführungsform zeichnet sich dadurch aus, dass der Oxidationskatalysatormantel in einem zweiten Anlagebereich am Aufnahmerohr anliegt. In dieser Ausführungsform liegt der Oxidationskatalysatormantel an zwei Anlagebereichen am Aufnahmerohr an. Die zwei Anlagebereiche können beispielsweise dadurch bereitgestellt werden, dass sich der Durchmesser des Oxidationskatalysatormantels zwischen den beiden Anlagebereichen reduziert. Alternativ kann sich der Durchmesser des Aufnahmerohres zwischen den beiden Anlagebereichen vergrößern. Dadurch, dass der Oxidationskatalysatormantel an zwei Anlagebereichen am Aufnahmerohr anliegt, wird die Wahrscheinlichkeit eines Verkantens des Oxidationskatalysatormantels gegenüber dem Aufnahmerohr verringert, wodurch die exakte Positionierung des Oxidationskatalysators im Aufnahmerohr bei der Fertigung vereinfacht wird. Die vorschlagsgemäße Abgasbehandlungsvorrichtung kann in dieser Ausführungsform mit vergleichsweise einfachen Mitteln sehr präzise gefertigt werden.

Nach Maßgabe einer weiteren Ausführungsform wirkt der Oxidationskatalysatormantel im ersten Anlagebereich und/oder im zweiten Anlagebereich reibschlüssig mit dem Aufnahmerohr zusammen. In dieser Ausführungsform ist der Oxidationskatalysatormantel nur mittels eines Reibschlusses und damit lösbar mit dem Aufnahmerohr verbunden. In dieser Ausführungsform kann daher nicht nur der Partikelfilter, sondern auch der Oxidationskatalysator mit geringem Aufwand ausgetauscht werden. Zudem lassen sich auch Versionen der Abgasnachbehandlungsvorrichtung bereitstellen, die keinen Oxidationskatalysator aufweisen, ohne hierfür nennenswerte konstruktive Änderungen vornehmen zu müssen. Derartige Versionen können insbesondere dann verwendet werden, wenn für den betreffenden Anwendungsfall die Oxidation der eingangs genannten Bestandteile des Abgases insbesondere aufgrund von gesetzlichen Vorgaben nicht notwendig ist. Es kann aber im ersten Bereich oder im zweiten Bereich eine Schweißnaht vorgesehen sein, um sicherzustellen, dass sich der Oxidationskatalysatormantel im Betrieb nicht relativ zum Aufnahmerohr bewegen kann. Zudem kann die Schweißnaht so ausgebildet sein, dass innere Leckagen vermieden werden und kein Abgas den Oxidationskatalysator umgehen kann.

Eine weitere Ausführungsform zeichnet sich dadurch aus, dass der Partikelfiltermantel in zumindest einem weiteren Anlagebereich am Aufnahmerohr anliegt und mit dem Aufnahmerohr reibschlüssig zusammenwirkt. Die vorschlagsgemäße Abgasnachbehandlungsvorrichtung weist eine Verbindungseinrichtung auf, mit welcher der Partikelfiltermantel lösbar mit dem Anschlussrohr verbindbar oder verbunden ist. Die Verbindungseinrichtung lässt sich so gestalten, dass die Position des Partikelfiltermantels im Aufnahmerohr mit der erforderlichen Genauigkeit festgelegt ist. Allerdings stützt der weitere Anlagebereich den Partikelfiltermantel im Aufnahmerohr ab, so dass die Belastung, welche auf die Verbindungseinrichtung wirkt, verringert werden kann. Folglich bleibt die gewünschte Ausrichtung des Partikelfiltermantels im Aufnahmerohr auch bei hohen Belastungen erhalten.

Eine weitere Ausführungsform gibt vor, dass im weiteren Anlagebereich ein Überbrückungskörper zwischen dem Partikelfiltermantel und dem Aufnahmerohr angeordnet ist. Der Überbrückungskörper weist eine gewisse Elastizität auf, stellt aber gleichzeitig die notwendige Reibung bereit, um den Partikelfiltermantel reibschlüssig mit dem Aufnahmerohr zu verbinden. Der Überbrückungskörper kann beispielsweise als ein Drahtgestrick ausgebildet werden und sorgt dafür, dass der Partikelfilter auch nach einer langen Betriebsdauer aus dem Aufnahmerohr entfernt werden kann. Aufgrund der thermischen Belastungen können sich der Partikelfiltermantel und das Aufnahmerohr verziehen und sich gegeneinander verspannen, dass ein Entfernen des Partikelfilters nur mit einem unverhältnismäßig hohen Aufwand möglich ist.

In einer weitergebildeten Ausführungsform kann die Verbindungseinrichtung als eine Schellenverbindung ausgestaltet sein. Schellenverbindungen haben sich als besonders robust und zuverlässig für die Anforderungen, welche bei Abgasnachbehandlungsvorrichtungen erfüllt werden müssen, erwiesen. Insbesondere zeichnen sich Schellenverbindungen durch eine hohe thermische und mechanische Belastbarkeit aus und sind unempfindlich gegenüber Verschmutzungen. Sie lassen sich auch nach längeren Betriebszeiten vergleichbar einfach lösen, was insbesondere bei der Verwendung von Schrauben nicht immer gegeben ist.

Bei einer weitergebildeten Ausführungsform kann die Abgasnachbehandlungsvorrichtung ein Umlenkgehäuse umfassen, welches eine Umlenkkammer bildet und welches mittels der Verbindungseinrichtung lösbar mit dem Anschlussrohr und dem Partikelfiltermantel verbindbar ist. Mit dem Umlenkgehäuse lässt sich das Abgas stromabwärts des Partikelfilters in weitere Innenräume der Abgasnachbehandlungsvorrichtung führen, in welchen weitere Schritte zum Nachbehandeln des Abgases durchgeführt werden können. Ein Beispiel für derartige Schritte ist das Einspritzen von Harnstoff, mit welchem sich eine selektive katalytische Reduktion insbesondere von Stickoxiden durchführen lässt.

Eine weitere Ausgestaltung der Erfindung betrifft ein Kraftfahrzeug, umfassend einen Verbrennungsmotor und eine Abgasanlage mit einer Abgasnachbehandlungsvorrichtung nach einer der vorherigen Ausführungsformen zum Nachbehandeln der vom Verbrennungsmotor erzeugten Abgase. Die technischen Effekte und Vorteile, die sich mit dem vorschlagsgemäßen Kraftfahrzeug erreichen lassen, entsprechen denjenigen, die für die vorliegende Abgasnachbehandlungsvorrichtung erörtert worden sind. Zusammenfassend sei darauf hingewiesen, dass die Abgasnachbehandlungsvorrichtung mit einfachen und kostengünstigen Mitteln so gestaltet werden kann, dass der Austausch des Partikelfilters mit geringem Aufwand und in kurzer Zeit durchgeführt werden kann.

Beispielhafte Ausführungsformen der Erfindung werden im Folgenden unter Bezugnahme auf die beigefügten Zeichnungen näher erläutert. Es zeigen
- Figuren 1A bis 1D: ein erstes Ausführungsbeispiel einer erfindungsgemäßen Abgasnachbehandlungsvorrichtung,
- Figuren 2A bis 2D: ein zweites Ausführungsbeispiel einer erfindungsgemäßen Abgasnachbehandlungsvorrichtung,
- Figuren 3A bis 3D: ein drittes Ausführungsbeispiel einer erfindungsgemäßen Abgasnachbehandlungsvorrichtung,
- Figuren 4A bis 4D: ein viertes Ausführungsbeispiel einer nicht zur Erfindung gehörigen Abgasnachbehandlungsvorrichtung, jeweils anhand von verschiedenen Darstellungen,
- Figur 5: eine vergrößerte Darstellung des in Figur 1A gekennzeichneten Ausschnitts P,
- Figur 6: eine vergrößerte Darstellung des in Figur 2A gekennzeichneten Ausschnitts Q, und
- Figur 7: eine prinzipielle Draufsicht auf ein Kraftfahrzeug, welches mit einer derartigen Abgasnachbehandlungsvorrichtung ausgerüstet ist.

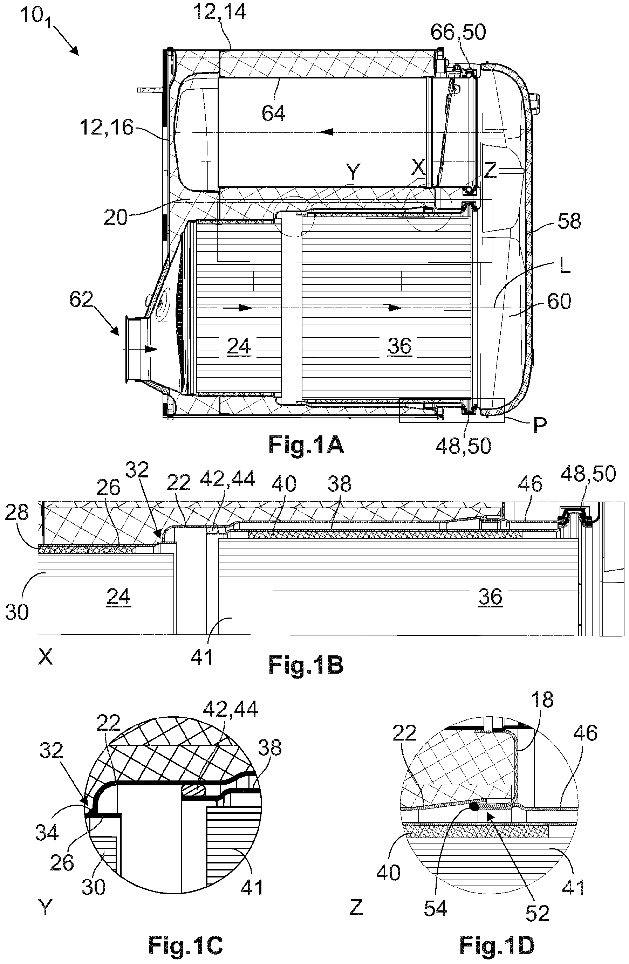

In den Figuren 1A bis 1D ist ein erstes Ausführungsbeispiel einer erfindungsgemäßen Abgasnachbehandlungsvorrichtung 10₁ dargestellt. Dabei zeigt die Figur 1A eine Schnittdarstellung durch das erste Ausführungsbeispiel der Abgasnachbehandlungsvorrichtung 10₁, Figur 1B eine vergrößerte Darstellung des in Figur 1A gekennzeichneten Ausschnitts X, Figur 1C eine vergrößerte Darstellung des in Figur 1A gekennzeichneten Ausschnitts Y und Figur 1D eine vergrößerte Darstellung des in Figur 1A gekennzeichneten Ausschnitts Z.

Die Abgasnachbehandlungsvorrichtung 10₁ weist ein Gehäuse 12 auf, welches einen Gehäusemantel 14, einen ersten Endboden 16 und einen zweiten Endboden 18 umfasst. Das Gehäuse 12 umschließt einen Innenraum 20, in welchem ein Aufnahmerohr 22 angeordnet ist. Das Aufnahmerohr 22 umschließt dabei teilweise einen Oxidationskatalysator 24, welcher einen Oxidationskatalysatormantel 26, eine Lagermatte 28 und ein Oxidationskatalysatorelement 30 umfasst. Die Lagermatte 28 ist in radialer Richtung gesehen zwischen dem Oxidationskatalysatorelement 30 und dem Oxidationskatalysatormantel 26 angeordnet, wobei der Oxidationskatalysatormantel 26 den Oxidationskatalysator 24 radial nach außen abschließt. Diese Anordnung des Oxidationskatalysatorelements 30 im Oxidationskatalysatormantel 26 wird auch als Canning bezeichnet. Wie insbesondere aus der Figur 1C zu erkennen ist, bildet der Oxidationskatalysatormantel 26 einen ersten Anlagebereich 32, mit welchem der Oxidationskatalysatormantel 26 am Aufnahmerohr 22 anliegt. Aus Figur 1C ist ebenfalls erkennbar, dass im ersten Anlagebereich 32 eine Schweißverbindung 34 vorgesehen ist, mit welcher der Oxidationskatalysatormantel 26 und das Aufnahmerohr 22 miteinander verbunden sind.

Weiterhin umfasst die Abgasnachbehandlungsvorrichtung 10₁ einen Partikelfilter 36, der einen Partikelfiltermantel 38, eine Lagermatte 40 und ein Partikelfilterelement 41 umfasst. Analog zum Oxidationskatalysator 24 ist die Lagermatte 40 in radialer Richtung gesehen zwischen dem Partikelfilterelement 41 und dem Partikelfiltermantel 38 angeordnet. Auch in diesem Fall schließt der Partikelfiltermantel 38 den Partikelfilter 36 radial nach außen ab. Aus Figur 1C ist ersichtlich, dass der Partikelfiltermantel 38 einen weiteren Anlagebereich 42 bildet, in welchem der Partikelfilter 36 am Aufnahmerohr 22 anliegt. Im dargestellten ersten Ausführungsbeispiel ist ein Überbrückungskörper 44 vorgesehen, der beispielsweise als ein Drahtgestrick ausgeführt werden kann,, mit welchem der Partikelfiltermantel 38 im weiteren Anlagebereich 42 reibschlüssig mit dem Aufnahmerohr 22 zusammenwirkt.

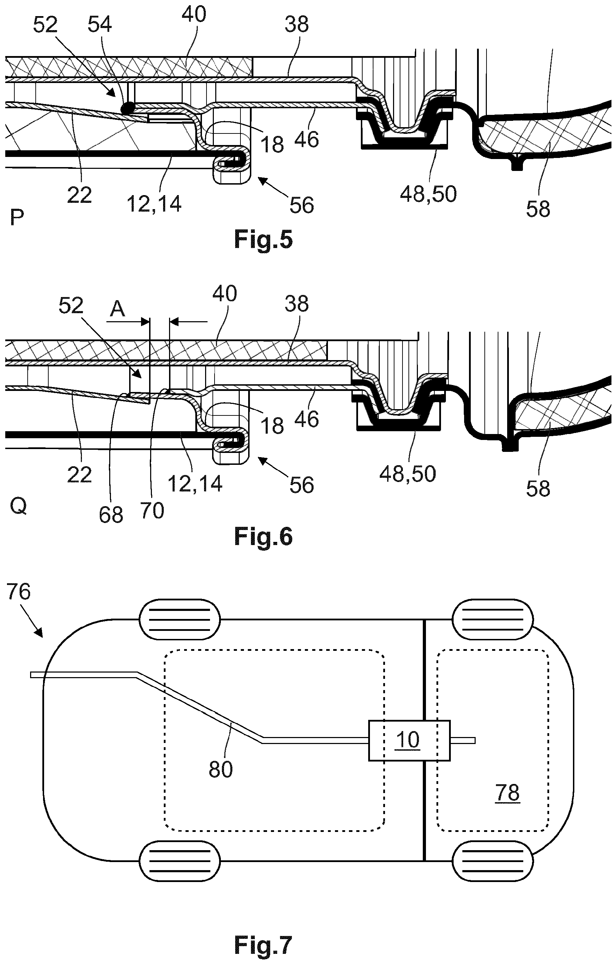

Sowohl aus der Figur 1A als auch aus der Figur 5, welche den in Figur 1A gekennzeichneten Ausschnitt P vergrößert darstellt, ist erkennbar, dass die Abgasnachbehandlungsvorrichtung 10₁ ein Anschlussrohr 46 aufweist, welches mittels einer Verbindungseinrichtung 48 lösbar mit dem Partikelfiltermantel 38 verbindbar ist. Die Verbindungseinrichtung 48 ist in diesem Fall als eine Schellenverbindung 50 ausgestaltet. Damit die Schellenverbindung 50 gut zugänglich ist, durchdringt der Partikelfiltermantel 38 den zweiten Endboden 18.

Wie ebenfalls aus der Figur 5 hervorgeht, sind das Anschlussrohr 46, der zweite Endboden 18 und das Aufnahmerohr 22 in einem Verbindungsabschnitt 52 miteinander verbunden. Im ersten Ausführungsbeispiel definiert das Aufnahmerohr 22 eine Längsachse L, entlang welcher das Aufnahmerohr 22, der zweite Endboden 18 und das Anschlussrohr 46 überlappend angeordnet sind. Das Aufnahmerohr 22, der zweite Endboden 18 und das Anschlussrohr 46 sind mit einer gemeinsamen Schweißnaht 54 miteinander verbunden. Der zweite Endboden 18 ist mittels einer Falzverbindung 56 mit dem Gehäusemantel 14 verbunden.

Weiterhin umfasst die Abgasnachbehandlungsvorrichtung 10₁ nach dem ersten Ausführungsbeispiel ein Umlenkgehäuse 58, welches eine Umlenkkammer 60 bildet. Das Umlenkgehäuse 58 ist ebenfalls mittels der Verbindungseinrichtung 48 mit dem Partikelfiltermantel 38 und dem zweiten Endboden 18 verbunden.

Wie insbesondere aus der Figur 1A hervorgeht, bildet der Oxidationskatalysatormantel 26 einen Einlass 62 für das nachzubehandelnde Abgas, wobei der Oxidationskatalysatormantel 26 den ersten Endboden 16 durchdringt. Das Aufnahmerohr 22 ist daher vollständig im Innenraum 20 angeordnet.

Das nachzubehandelnde Abgas wird im Wesentlichen parallel zur Längsachse L durch den Einlass 62 in die Abgasnachbehandlungsvorrichtung 10₁ eingeleitet und durchströmt zunächst den Oxidationskatalysator 24 und anschließend den Partikelfilter 36. Danach tritt das Abgas in die Umlenkkammer 60 ein und wird dort bezogen auf die in Figur 1A gewählte Darstellung nach oben und dann nach links abgelenkt, wo sich ein Führungsrohr 64 befindet, in welchem das Abgas weiter nachbehandelt werden kann, beispielsweise durch Einspritzen von Harnstoff. Das Umlenkgehäuse 58 ist mit einer weiteren Verbindungseinrichtung 66 mit dem Führungsrohr 64 verbunden, wobei die weitere Verbindungseinrichtung 48 ebenfalls als eine Schellenverbindung 50 ausgestaltet sein kann. Im Führungsrohr 64 strömt das Abgas im Wesentlichen parallel zur Längsachse L, allerdings in eine Richtung, die entgegengesetzt zu der Richtung ist, in welcher das Abgas den Oxidationskatalysator 24 und den Partikelfilter 36 durchströmt.

Wenn der Partikelfilter 36 ausgetauscht werden soll, werden die Schellenverbindungen 50 gelöst, so dass das Umlenkgehäuse 58 entfernt werden kann. Sobald die Schellenverbindungen 50 gelöst sind, ist auch die Verbindung zwischen dem Partikelfiltermantel 38 und dem Anschlussrohr 46 aufgehoben, so dass der Partikelfilter 36 mit einer entlang der Längsachse L gerichteten Bewegung aus der Abgasnachbehandlungsvorrichtung 10₁ und insbesondere aus dem Aufnahmerohr 22 herausgezogen werden kann. Zum Einsetzen eines neuen Partikelfilters 36 wird in umgekehrter Reihenfolge vorgegangen.

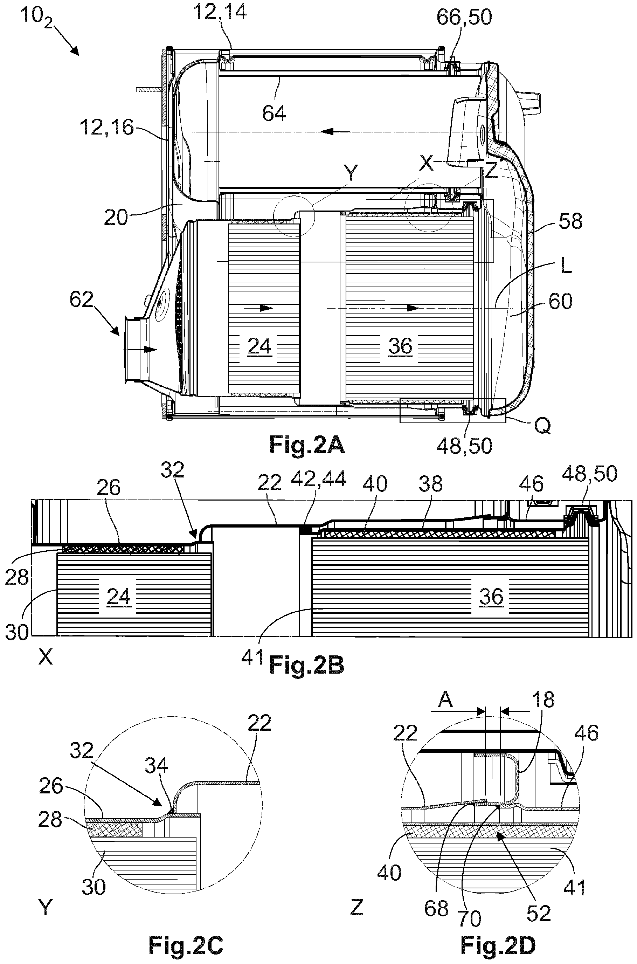

In den Figuren 2A bis 2D ist ein zweites Ausführungsbeispiel der Abgasnachbehandlungsvorrichtung 10₂ dargestellt, wobei die Figuren 2A bis 2D das zweite Ausführungsbeispiel der Abgasnachbehandlungsvorrichtung 10₁ in analoger Weise wie die Figuren 1A bis 1D zeigen. Figur 6 zeigt den in Figur 2A gekennzeichneten Ausschnitt Q in vergrößerter Darstellung. Der wesentliche Aufbau der Abgasnachbehandlungsvorrichtung 10₁ nach dem zweiten Ausführungsbeispiel gleicht dabei weitgehend dem Aufbau der Abgasnachbehandlungsvorrichtung 10₁ nach dem ersten Ausführungsbeispiel, weshalb im Folgenden nur auf die Unterschiede eingegangen wird.

Wie insbesondere aus den Figuren 2D und 6 hervorgeht, überlappen sich das Aufnahmerohr 22 und das Anschlussrohr 46 entlang der Längsachse L nicht. Folglich sind die zueinander hinzeigenden Enden des Aufnahmerohres 22 und des Anschlussrohres 46 in einem Abstand A beabstandet zueinander angeordnet, wobei der Abstand A vom zweiten Endboden 18 überbrückt wird. Das Aufnahmerohr 22 ist mittels einer ersten Schweißnaht 68 mit dem zweiten Endboden 18 verbunden, während das Anschlussrohr 46 mit einer zweiten Schweißnaht 70 mit dem zweiten Endboden 18 verbunden ist.

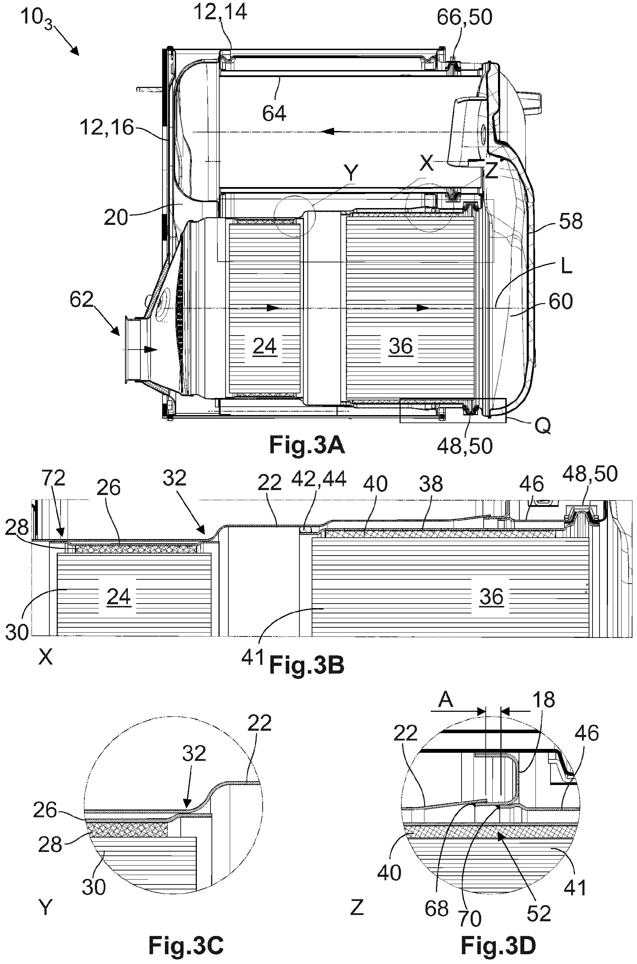

In den Figuren 3A bis 3D ist ein drittes Ausführungsbeispiel der erfindungsgemäßen Abgasnachbehandlungsvorrichtung 10₃ gezeigt, wobei die Figuren 3A bis 3D die Abgasnachbehandlungsvorrichtung 10₃ in gleicher Weise zeigen, wie es in den Figuren 1 und 2 für die dort gezeigten Ausführungsbeispiele der Fall ist. Wie insbesondere aus Figur 3B hervorgeht, bildet der Oxidationskatalysatormantel 26 einen zweiten Anlagebereich 72, welcher beabstandet zum ersten Anlagebereich 32 angeordnet ist. Zwischen dem ersten Anlagebereich 32 und dem zweiten Anlagebereich 72 verjüngt sich der Durchmesser des Oxidationskatalysatormantels 26. Im Gegensatz zu dem ersten und dem zweiten Ausführungsbeispiel der erfindungsgemäßen Abgasnachbehandlungsvorrichtung 10₁, 10₂ ist der Oxidationskatalysatormantel 26 nicht mittels einer Schweißnaht mit dem Aufnahmerohr 22 verbunden, sondern liegt reibschlüssig am Aufnahmerohr 22 an. In dem ersten Anlagebereich 32 und/oder im zweiten Anlagebereich 72 können aber jeweils eine Schweißnaht vorgesehen sein, wenn dies als erforderlich oder vorteilhaft erachtet werden sollte. Ebenfalls im Gegensatz zu dem ersten und dem zweiten Ausführungsbeispiel wird der Einlass 62 nicht vom Oxidationskatalysatormantel 26 gebildet, sondern vom Aufnahmerohr 22, welches den ersten Endboden 16 durchdringt und somit nicht vollständig im Innenraum 22 angeordnet ist. Die wesentliche Eigenschaft der Abgasnachbehandlungsvorrichtung 10₃ nach dem dritten Ausführungsbeispiel im Vergleich zum ersten und zweiten Ausführungsbeispiel ist, dass der Oxidationskatalysator 24 auf relativ einfache Weise aus dem Aufnahmerohr 22 entnommen werden kann, ohne dass hierzu eine Schweißverbindung oder dergleichen geöffnet werden müsste. Will man eine Ausführungsform ohne den Oxidationskatalysator 24 realisieren, können bei der Fertigung alle Bauteile gleich bleiben, so dass der Anteil von Gleichteilen erhöht wird.

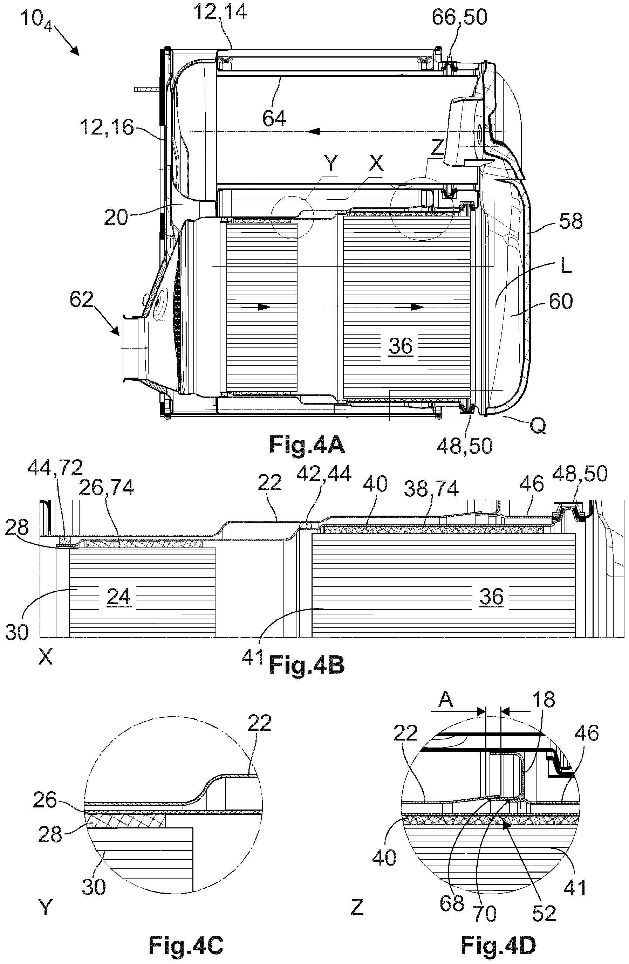

In den Figuren 4A bis 4D ist ein nicht zur Erfindung gehöriges viertes Ausführungsbeispiel der Abgasnachbehandlungsvorrichtung 10₄ in analoger Weise gezeigt, wie es in den Figuren 1 bis 3 für die dort gezeigten Ausführungsbeispiele der Fall ist. Die Abgasnachbehandlungsvorrichtung 10₄ gemäß dem vierten Ausführungsbeispiel weist weitgehende Ähnlichkeiten zu der Abgasnachbehandlungsvorrichtung 10₃ gemäß dem dritten Ausführungsbeispiel auf, allerdings sind der Oxidationskatalysatormantel 26 und der Partikelfiltermantel 38 zu einem gemeinsamen Mantel 74 zusammengefasst. Folglich bilden der Oxidationskatalysator 24 und der Partikelfilter 36 eine gemeinsame Baueinheit, welche durch eine entsprechende Bewegung im Wesentlichen parallel zur Längsachse L in das Aufnahmerohr 22 eingeschoben und von dieser wieder entfernt werden kann. Wiederum wird der Einlass 62 vom Aufnahmerohr 22 gebildet, allerdings entfällt der erste Anlagebereich 32, da der gemeinsame Mantel 74 wie auch der Oxidationskatalysator 24 im vierten Ausführungsbeispiel der erfindungsgemäßen Abgasnachbehandlungsvorrichtung 10₄ den weiteren Anlagebereich 42 und den zweiten Anlagebereich 72 bildet, an welchem der gemeinsame Mantel 74 am Aufnahmerohr 22 reibschlüssig anliegt. Wie auch im dritten Ausführungsbeispiel der erfindungsgemäßen Abgasnachbehandlungsvorrichtung 10₃ ist im weiteren Anlagebereich 42 der Überbrückungskörper 44 vorgesehen, der, wie erwähnt, als ein Drahtgestrick ausgebildet ist. Auch im zweiten Anlagebereich 72 ist ein Überbrückungskörper 44 angeordnet. Die Überbrückungskörper 44 sind dabei so angeordnet und dimensioniert, dass zwischen dem Aufnahmerohr 22 und dem gemeinsamen Mantel 74 ein Ringspalt verbleibt.

In Figur 7 ist eine prinzipielle Draufsicht auf ein Kraftfahrzeug 76 dargestellt. Das Kraftfahrzeug 76, insbesondere ein Nutzfahrzeug, weist einen Verbrennungsmotor 78, insbesondere von einem Dieselmotor, auf, dessen Abgase über eine Abgasanlage 80 abgeführt werden. Das Kraftfahrzeug 76 weist eine Abgasnachbehandlungsvorrichtung 10 nach einem der zuvor erläuterten Ausführungsbeispiele auf, die mit der Abgasanlage 80 zusammenwirkt, um die Abgase nachzubehandeln.

### Bezugszeichenliste

- 10: Abgasnachbehandlungsvorrichtung
- 10₁ - 10₄: Abgasnachbehandlungsvorrichtung
- 12: Gehäuse
- 14: Gehäusemantel
- 16: erster Endboden
- 18: zweiter Endboden
- 20: Innenraum
- 22: Aufnahmerohr
- 24: Oxidationskatalysator
- 26: Oxidationskatalysatormantel
- 28: Lagermatte

- 30: Oxidationskatalysatorelement
- 32: erster Anlagebereich
- 34: Schweißverbindung
- 36: Partikelfilter
- 38: Partikelfiltermantel

- 40: Lagermatte
- 41: Partikelfilterelement
- 42: weiterer Anlagebereich
- 44: Überbrückungskörper
- 46: Anschlussrohr
- 48: Verbindungseinrichtung

- 50: Schellenverbindung
- 52: Verbindungsabschnitt
- 54: gemeinsame Schweißnaht
- 56: Falzverbindung
- 58: Umlenkgehäuse
- 60: Umlenkkammer
- 62: Einlass
- 64: Führungsrohr
- 66: weitere Verbindungseinrichtung
- 68: erste Schweißnaht

- 70: zweite Schweißnaht
- 72: zweiter Anlagebereich
- 74: gemeinsamer Mantel
- 76: Kraftfahrzeug
- 78: Verbrennungsmotor
- 80: Abgasanlage

- A: Abstand
- L: Längsachse

## Patentansprüche

1. Abgasnachbehandlungsvorrichtung (10) für eine Abgasanlage (80) eines Kraftfahrzeugs (76), umfassend
- ein Gehäuse (12) mit
o einem Gehäusemantel (14), einem ersten Endboden (16) und einem zweiten Endboden (18),
o die einen Innenraum (20) umschließen,
- ein ganz oder teilweise im Innenraum (20) angeordnetes Aufnahmerohr (22), welches eine Längsachse (L) definiert,
- einen ganz oder teilweise im Aufnahmerohr (22) angeordneter Oxidationskatalysator (24) mit einem Oxidationskatalysatormantel (26), wobei der Oxidationskatalysatormantel (26) in zumindest einem ersten Anlagebereich (32) am Aufnahmerohr (22) anliegt,
- einen teilweise im Aufnahmerohr (22) angeordneten Partikelfilter (36) mit einem Partikelfiltermantel (38), der den zweiten Endboden (18) durchdringt,
- ein Anschlussrohr (46), welches mittels einer Verbindungseinrichtung (48) lösbar mit dem Partikelfiltermantel (38) verbindbar oder verbunden ist, wobei
- das Aufnahmerohr (22), der zweite Endboden (18) und das Anschlussrohr (46) in einem Verbindungsabschnitt (52) miteinander verbunden sind,
wobei
- das Aufnahmerohr (22), der zweite Endboden (18) und das Anschlussrohr (46) entlang der Längsachse (L) im Verbindungsabschnitt (52) überlappend angeordnet sind, und
- im Verbindungsabschnitt (52) mittels einer gemeinsamen Schweißnaht (54) miteinander verbunden sind, oder
- das Aufnahmerohr (22) und das Anschlussrohr (46) entlang der Längsachse (L) im Verbindungsabschnitt (52) beabstandet zueinander angeordnet sind, wobei
∘ das Aufnahmerohr (22) im Verbindungsabschnitt (52) mit einer ersten Schweißnaht (68) mit dem zweiten Endboden (18) verbunden ist und
∘ das Anschlussrohr (46) im Verbindungsabschnitt (52) mit einer zweiten Schweißnaht (70) mit dem zweiten Endboden (18) verbunden ist.

2. Abgasnachbehandlungsvorrichtung (10) nach Anspruch 1, **dadurch gekennzeichnet, dass** der zweite Endboden (18) mittels einer Falzverbindung (56) mit dem Gehäusemantel (14) verbunden ist.

3. Abgasnachbehandlungsvorrichtung (10) nach einem der vorherigen Ansprüche, **dadurch gekennzeichnet, dass** der Oxidationskatalysatormantel (26) im ersten Anlagebereich (32) mittels einer Schweißverbindung (34) mit dem Aufnahmerohr (22) verbunden ist.

4. Abgasnachbehandlungsvorrichtung (10) nach einem der Ansprüche 1 bis 3, **dadurch gekennzeichnet, dass** der Oxidationskatalysatormantel (26) in einem zweiten Anlagebereich (72) am Aufnahmerohr (22) anliegt.

5. Abgasnachbehandlungsvorrichtung (10) nach Anspruch 4, **dadurch gekennzeichnet, dass** der Oxidationskatalysatormantel (26) im ersten Anlagebereich (32) und im zweiten Anlagebereich (72) reibschlüssig mit dem Aufnahmerohr (22) zusammenwirkt.

6. Abgasnachbehandlungsvorrichtung (10) nach einem der vorherigen Ansprüche, **dadurch gekennzeichnet, dass** der Partikelfiltermantel (38) in zumindest einem weiteren Anlagebereich (42) am Aufnahmerohr (22) anliegt und mit dem Aufnahmerohr (22) reibschlüssig zusammenwirkt.

7. Abgasnachbehandlungsvorrichtung (10) nach Anspruch 6, **dadurch gekennzeichnet, dass** im weiteren Anlagebereich (42) ein Überbrückungskörper (44) zwischen dem Partikelfiltermantel (38) und dem Aufnahmerohr (22) angeordnet ist.

8. Abgasnachbehandlungsvorrichtung (10) nach einem der vorherigen Ansprüche, **dadurch gekennzeichnet, dass** die Verbindungseinrichtung (48) als eine Schellenverbindung (50) ausgestaltet ist.

9. Abgasnachbehandlungsvorrichtung (10) nach einem der vorherigen Ansprüche, **dadurch gekennzeichnet, dass** die Abgasnachbehandlungsvorrichtung (10) ein Umlenkgehäuse (58) umfasst, welches eine Umlenkkammer (60) bildet und welches mittels der Verbindungseinrichtung (48) lösbar mit dem Anschlussrohr (46) und dem Partikelfiltermantel (38) verbindbar ist.

10. Kraftfahrzeug (76), umfassend einen Verbrennungsmotor (78) und eine Abgasanlage (80) mit einer Abgasnachbehandlungsvorrichtung (10) nach einem der vorherigen Ansprüche zum Nachbehandeln der vom Verbrennungsmotor (78) erzeugten Abgase.

## Claims

1. Exhaust gas treatment apparatus (10) for an exhaust gas system (80) of a motor vehicle (76), comprising
- a housing (12), having
o a housing casing (14), a first end plate (16) and a second end plate (18),
o which form an inner chamber (20),
- an intake pipe (22), arranged entirely or partially in the inner chamber (20), which defines a longitudinal axis (L),
- an oxidation catalytic converter (24), arranged entirely or partially in the intake pipe (22), having an oxidation catalytic converter casing (26), wherein the oxidation catalytic converter casing (26) joins the intake pipe (22) in at least one first joining region (32),
- a particulate filter (36), arranged partially in the intake pipe (22), having a particulate filter casing (38) which penetrates the second end plate (18),
- a connection pipe (22), which is detachably attachable or attached to the particulate filter casing (38) by means of a connecting device (48), wherein
- the intake pipe (22), the second end plate (18) and the connection pipe (46) are connected to each other in a connection section (52), wherein
- the intake pipe (22), the second end plate (18) and the connection pipe (46) are arranged overlapping along the longitudinal axis (L) in the connection section (52), and
- are connected to each other in the connection section (52) by means of a common welding seam (54), or
- the intake pipe (22) and the connection pipe (46) are arranged at a distance to each other along the longitudinal axis (L) in the connection section (52), wherein
o the intake pipe (22) is connected to the second end plate (18) in the connection section (52) by a first welding seam (68), and
o the connection pipe (46) is connected to the second end plate (18) in the connection section (52) by a second welding seam (70).

2. Exhaust gas treatment apparatus (10) in accordance with claim 1,
**characterized in that** the second end plate (18) is connected to the housing casing (14) by means of a folded seam connection (56).

3. Exhaust gas treatment apparatus (10) in accordance with either of the preceding claims,
**characterized in that** the oxidation catalytic converter casing (26) is connected to the intake pipe (22) in the first joining region (32) by means of welded connection (34).

4. Exhaust gas treatment apparatus (10) in accordance with any of claims 1 to 3, **characterized in that** the oxidation catalytic converter casing (26) joins the intake pipe (22) in a second joining region (72).

5. Exhaust gas treatment apparatus (10) in accordance with claim 4,
**characterized in that** the oxidation catalytic converter casing (26) interacts with the intake pipe (22) in a friction-locking manner in the first joining region (32) and in the second joining region (72).

6. Exhaust gas treatment apparatus (10) in accordance with any of the preceding claims, **characterized in that** the particulate filter casing (38) joins the intake pipe (22) in at least one further joining region (42) and interacts with the intake pipe (22) in a friction-locking manner.

7. Exhaust gas treatment apparatus (10) in accordance with claim 6,
**characterized in that** a bridging element (44) is arranged between the particulate filter casing (38) and the intake pipe (22) in the further joining region (42).

8. Exhaust gas treatment apparatus (10) in accordance with any of the preceding claims, **characterized in that** the connecting device (48) is implemented as a clamp connection (50).

9. Exhaust gas treatment apparatus (10) in accordance with any of the preceding claims, **characterized in that** the exhaust gas treatment apparatus (10) comprises a deflecting housing (58) which forms a deflection chamber (60) and which is detachably connectable to the connection pipe (46) and to the particulate filter casing (38).

10. Motor vehicle (76) comprising an internal combustion engine (78) and an exhaust gas system (80) having an exhaust gas treatment system (10) in accordance with any of the preceding claims for the subsequent treatment of the exhaust gasses produced by the internal combustion engine (78).

## Revendications

1. Dispositif post-traitement des gaz d'échappement (10) d'une installation de gaz d'échappement (80) d'un véhicule automobile (76) comprenant :
- un boîtier (12) avec,
* une enveloppe de boîtier (14) ayant un premier fond (16) et un second fond (18),
* entourant un volume intérieur (20),
- un tuyau récepteur (22) installé totalement ou partiellement dans le volume intérieur (20) et qui définit un axe longitudinal (L),
- un catalyseur d'oxydation (24) en totalité ou en partie dans le tuyau récepteur (22) et ayant une enveloppe de catalyseur d'oxydation (26), cette enveloppe (26) s'appliquant contre le tuyau récepteur (22) dans au moins une première zone d'appui (32),
- un filtre à particules (36) comportant une enveloppe de filtre à particules (38) et partiellement installé dans le tuyau récepteur (22), cette enveloppe traversant le second fond (18),
- un tuyau de raccordement (46) qui est ou peut être relié par une installation de liaison (48) de manière amovible à l'enveloppe de filtre à particules (38),
- le tuyau récepteur (22), le second fond (18) et le tuyau de raccordement (46) étant reliés les uns aux autres dans un segment de liaison (52),
- le tuyau récepteur (22), le second fond (18) et le tuyau de raccordement (46) se chevauchant selon l'axe longitudinal (L) dans le segment de liaison (52), et
- il sont reliés les uns aux autres dans le segment de liaison (52) avec un cordon de soudure (54) commun, ou
- le tuyau récepteur (22) et le tuyau de raccordement (46) sont écartés l'un de l'autre selon l'axe longitudinal (L) dans le segment de liaison (52),
* le tuyau récepteur (22) est relié dans le segment de liaison (52) au second fond (18) par un premier cordon de soudure (68), et
* le tuyau de raccordement (46) est relié dans le segment de liaison (52) par un second cordon de soudure (70) au second fond (18).

2. Dispositif de post-traitement des gaz d'échappement (10) selon la revendication 1,
**caractérisé en ce que**
le troisième fond (18) est relié par une agrafe (56) à l'enveloppe de boîtier (14).

3. Dispositif de post-traitement des gaz d'échappement (10) selon l'une des revendications précédentes,
**caractérisé en ce que**
l'enveloppe de catalyseur d'oxydation (26) est reliée par une soudure (34) dans la première zone d'appui (32) au tuyau récepteur (22).

4. Dispositif de post-traitement des gaz d'échappement (10) selon l'une des revendications 1 à 3,
**caractérisé en ce que**
l'enveloppe de catalyseur d'oxydation (26) est appliquée contre le tuyau récepteur (22) dans une seconde zone d'appui (72).

5. Dispositif de post-traitement des gaz d'échappement (10) selon la revendication 4,
**caractérisé en ce que**
l'enveloppe de catalyseur d'oxydation (26) coopère par une liaison par frottement avec le tuyau récepteur (22) dans la première zone d'appui (32) et dans la seconde zone d'appui (72).

6. Dispositif de post-traitement des gaz d'échappement (10) selon l'une des revendications précédentes,
**caractérisé en ce que**
l'enveloppe de filtre à particules (38) s'applique contre le tuyau récepteur (22) dans au moins une autre zone d'appui (42) et il coopère par une liaison par frottement avec le tuyau récepteur (22).

7. Dispositif de post-traitement des gaz d'échappement (10) selon la revendication 6,
**caractérisé en ce que**
un organe de chevauchement (44) est prévu dans une autre zone d'appui (42) entre l'enveloppe de filtre à particules (38) et le tuyau récepteur (22).

8. Dispositif de post-traitement des gaz d'échappement (10) selon l'une des revendications précédentes,
**caractérisé en ce que**
l'installation de liaison (48) est sous la forme d'une liaison par collier (50).

9. Dispositif de post-traitement des gaz d'échappement (10) selon l'une des revendications précédentes,
**caractérisé en ce que**
le dispositif de post-traitement des gaz d'échappement (10) comprend un boîtier de déviation (58) formant une chambre de déviation (60) et reliée par l'installation de liaison (48) de manière amovible au tuyau de raccordement (46) et à l'enveloppe de filtre à particules (38).

10. Véhicule automobile (76) équipe d'un moteur à combustion (78) et d'une installation de gaz d'échappement (80) avec un dispositif de post-traitement des gaz d'échappement (10) selon l'une des revendications précédentes pour le post-traitement des gaz d'échappement émis par le moteur à combustion (78).
